(19) Europäisches Patentamt
European Patent Office
Office européen des brevets

(11)     **EP 3 467 014 B1**

(12)                                          **EUROPEAN PATENT SPECIFICATION**

(45) Date of publication and mention
of the grant of the patent:
**21.10.2020   Bulletin 2020/43**

(51) Int Cl.:
*C08J 9/28* *(2006.01)*        *B29C 67/20* *(2006.01)*

(21) Application number: **17806241.0**

(86) International application number:
**PCT/JP2017/016302**

(22) Date of filing: **25.04.2017**

(87) International publication number:
**WO 2017/208681 (07.12.2017 Gazette 2017/49)**

(54) **METHOD OF PRODUCING POROUS BODY**

VERFAHREN ZUR HERSTELLUNG EINES PORÖSEN KÖRPERS

PROCÉDÉ DE PRODUCTION D'UN CORPS POREUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2016   JP 2016110099**

(43) Date of publication of application:
**10.04.2019   Bulletin 2019/15**

(73) Proprietor: **DIC Corporation
Tokyo 174-8520 (JP)**

(72) Inventor: **FUJISHITA, Norie
Takaishi-shi
Osaka 592-0001 (JP)**

(74) Representative: **Beckmann, Claus
Kraus & Weisert
Patentanwälte PartGmbB
Thomas-Wimmer-Ring 15
80539 München (DE)**

(56) References cited:
**WO-A1-2015/012117      JP-A- H08 501 819
JP-A- 2001 172 882       JP-A- 2002 249 985
JP-A- 2002 275 304       JP-A- 2004 516 369
JP-A- 2005 213 411       JP-A- 2015 174 970
US-A1- 2004 121 113**

Remarks:
The file contains technical information submitted after
the application was filed and not included in this
specification

## Description

Technical Field

The present invention relates to a method for producing a porous body having vertically long cells using an aqueous urethane resin composition.

Background Art

As the use of organic solvents including dimethylformamide (DMF) is increasingly strictly regulated in the European countries and China, aqueous urethane resin compositions are more frequently used in the fields of leather-like sheets, such as an artificial leather and a synthetic leather, gloves, coating agents, adhesives and the like.

In processing the aqueous urethane resin composition, for the purpose of improving the resultant processed products in texture and the like, a method is widely used in which the composition is subjected to special treatment so that the resultant product has a porous structure. For example, PTL 1 discloses a method in which an aqueous urethane resin composition is applied to a substrate and then subjected to heating treatment using wet heat and microwaves in combination to form a porous structure. PTL 2 discloses a method in which a porous structure is formed from an aqueous urethane resin composition by heating using wet heat heating by steam and high-frequency heating or high-frequency induction heating in combination, or the like. PTL 3 discloses a method in which a fiber substrate is impregnated with an aqueous urethane resin composition and then subjected to thermal gellation treatment to form a porous structure.

In addition, other methods are disclosed in which foam is included in an aqueous urethane resin composition by mechanical foaming or the like, and then the resultant composition is subjected to coagulation, dried and the like to form a porous film (see, for example, PTL's 4 to 7).

The above-mentioned documents are only a part of the examples, and a great number of other studies have been made on the formation of a porous structure from the aqueous urethane resin composition. However, there are sill problems to be solved not only in that a cumbersome treatment, such as a heating or foaming step, is needed, but also in that only porous bodies having so-called closed cells (closed-cell type) or cells which are small and are not uniform are obtained.

On the other hand, as a method for obtaining a processed article having very excellent texture, elastic force, peel strength, water vapor permeability and the like, a method has been known in which a film is formed by a wet process from a solvent-type urethane resin composition containing DMF, and, with respect to this method, it has been well known that a porous body having cells called a communicating-cell type, a vertically long cell type, a teardrop-shaped cell type, or the like can be formed (see, for example, PTL 8). However, it has been considered that, when using an aqueous urethane resin composition containing urethane particles in the state of being dispersed in water or the like, which are different from the urethane resin in the solvent-type urethane resin composition, it is impossible to produce a porous body having similar cells called a communicating-cell type, a vertically long cell type, a teardrop-shaped cell type, or the like. A process for preparing a coagulated film is described in patent document WO 2015/012117 A1.

Citation List

Patent Literature

PTL 1: JP-A-2000-160484
PTL 2: JP-A-2002-249985
PTL 3: JP-A-2013-083031
PTL 4: JP-A-2005-273083
PTL 5: JP-T-2006-511727 (the term "JP-T" as used herein means a published Japanese translation of a PCT patent application)
PTL 6: JP-T-2006-524754
PTL 7: JP-T-2009-527658
PTL 8: JP-T-2013-023691

## Summary of Invention

### Technical Problem

A task to be achieved by the present invention is to provide a method for producing a porous body having vertically long cells using an aqueous urethane resin composition.

### Solution to Problem

According to the invention, there is provided a method for producing a porous body, comprising: incorporating, into an aqueous urethane resin composition containing an aqueous urethane resin (A) having an acid value of 0.01 mg KOH/g or more, a thickening agent (B) having a carboxyl group and having an oxyethylene group content of $2 \times 10^{-2}$ mol/g or less in an amount in the range of from 0.01 to 30 parts by mass, relative to 100 parts by mass of the aqueous urethane resin (A), to thicken the composition so as to have a viscosity of 400 mPa.s or more; and then coagulating the thickened composition using a coagulant (C) containing a metal salt (c-1).

### Advantageous Effects of Invention

By the method of invention, a porous body having vertically long cells can be produced using an aqueous urethane resin composition. The obtained porous body has excellent texture, elastic force, peel strength, and water vapor permeability, as compared to a porous body having cells of a closed-cell type.

### Brief Description of Drawing

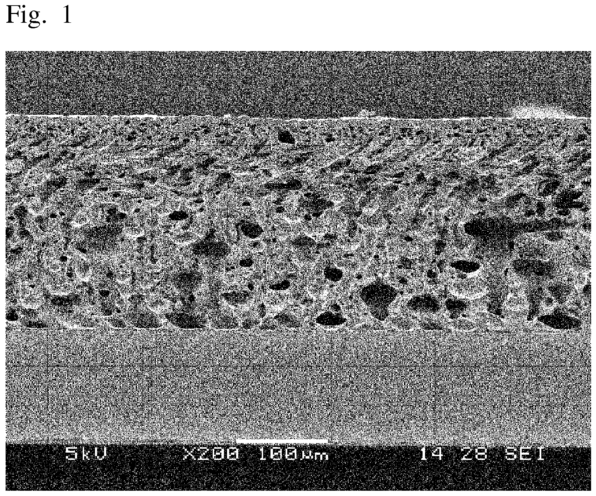

[Fig. 1] Fig. 1 shows an electron photomicrograph of the cross-sectional view of a porous body obtained in Example 1 (magnification: 200 times).

### Description of Embodiments

It is necessary that a method for producing a porous body of the invention comprise incorporating, into an aqueous urethane resin composition containing an aqueous urethane resin (A) having an acid value of 0.01 mg KOH/g or more, a thickening agent (B) having a carboxyl group and having an oxyethylene group content of $2 \times 10^{-2}$ mol/g or less in an amount in the range of from 0.01 to 30 parts by mass, relative to 100 parts by mass of the aqueous urethane resin (A), to thicken the composition so as to have a viscosity of 400 mPa.s or more, and then coagulating the thickened composition using a coagulant (C) containing a metal salt (c-1).

In the invention, the term "porous body" means a material having a number of pores. Further, the term "vertically long cells" means cells that can be apparently seen as those which are vertically long, as examined by means of a scanning electron microscope with respect to the cross-sectional view of a porous body (specifically, see the below-mentioned "Method for evaluating the state of formation of the vertically long cells of a porous body"), and such cells include not only cells that can be seen as those which are long in the vertical direction with respect to the base material in the coagulate film but also cells that can be seen as those which are long in any direction in the coagulate film, and exclude cells formed from cells of a closed-cell type which are stacked on one another.

With respect to the aqueous urethane resin (A) used in the invention, the use of the aqueous urethane resin having an acid value of 0.01 mg KOH/g or more is essential for obtaining a porous body having vertically long cells. It is considered that, by virtue of the acid value of the aqueous urethane resin (A) in the above range, the synthesized aqueous urethane resin is stable and further can be easily coagulated using the coagulant (C), making it possible to obtain a porous body having vertically long cells. From the viewpoint of obtaining more excellent vertically long cells, the acid value is preferably in the range of from 0.01 to 70 mg KOH/g, more preferably in the range of from 1 to 50 mg KOH/g, further preferably in the range of from 3 to 40 mg KOH/g, especially preferably in the range of from 6 to 30 mg KOH/g. The method for measuring the acid value of the aqueous urethane resin (A) is described in the Examples below.

The aqueous urethane resin (A) has the above-mentioned acid value, and, specifically, has a structure derived from an anionic group, such as a carboxyl group or a sulfonic group. As the aqueous urethane resin (A), for example, a reaction product of a polyol (a-1), a compound (a-2) giving an anionic group, a chain extender (a-3), and a polyisocyanate (a-4) can be used.

As the polyol (a-1), for example, polyether polyol, polycarbonate polyol, polyester polyol, polyacrylic polyol, polybutadiene polyol, castor oil polyol, or the like can be used. These polyols (a-1) may be used individually or in any combination. Of these, from the viewpoint of more stably obtaining a porous body having vertically long cells, polyether polyol and/or polycarbonate polyol is preferably used, at least one polyol selected from the group consisting of polyoxytetramethylene glycol, polyoxypropylene glycol, and polycarbonate polyol is more preferred, and polyoxytetramethylene glycol and/or polycarbonate polyol is further preferred.

From the viewpoint of the flexibility and the production stability of the aqueous urethane resin, the number average molecular weight of the polyol (a-1) is preferably in the range of from 500 to 15,000, more preferably in the range of from 600 to 10,000, further preferably in the range of from 700 to 8,000, especially preferably in the range of from 800 to 5,000. The number average molecular weight of the polyol (a-1) is a value measured by a gel permeation chromatography (GPC) method under the conditions shown below.

Measuring apparatus: High-speed GPC apparatus ("HLC-8220GPC", manufactured by Tosoh Corp.)

Columns: The columns shown below, manufactured by Tosoh Corp., which are connected in series were used.

"TSKgel G5000" (7.8 mm I.D. $\times$ 30 cm) $\times$ 1
"TSKgel G4000" (7.8 mm I.D. $\times$ 30 cm) $\times$ 1
"TSKgel G3000" (7.8 mm I.D. $\times$ 30 cm) $\times$ 1
"TSKgel G2000" (7.8 mm I.D. $\times$ 30 cm) $\times$ 1

Detector: RI (differential refractometer)
Column temperature: 40°C
Eluent: Tetrahydrofuran (THF)
Flow rate: 1.0 mL/minute
Sample amount per injection: 100 $\mu$L (tetrahydrofuran solution having a sample concentration of 0.4% by mass)
Standard sample: A calibration curve was prepared using the standard polystyrenes shown below.

(Standard polystyrenes)

"TSKgel standard polystyrene A-500", manufactured by Tosoh Corp.
"TSKgel standard polystyrene A-1000", manufactured by Tosoh Corp.
"TSKgel standard polystyrene A-2500", manufactured by Tosoh Corp.
"TSKgel standard polystyrene A-5000", manufactured by Tosoh Corp.
"TSKgel standard polystyrene F-1", manufactured by Tosoh Corp.
"TSKgel standard polystyrene F-2", manufactured by Tosoh Corp.
"TSKgel standard polystyrene F-4", manufactured by Tosoh Corp.
"TSKgel standard polystyrene F-10", manufactured by Tosoh Corp.
"TSKgel standard polystyrene F-20", manufactured by Tosoh Corp.
"TSKgel standard polystyrene F-40", manufactured by Tosoh Corp.
"TSKgel standard polystyrene F-80", manufactured by Tosoh Corp.
"TSKgel standard polystyrene F-128", manufactured by Tosoh Corp.
"TSKgel standard polystyrene F-288", manufactured by Tosoh Corp.
"TSKgel standard polystyrene F-550", manufactured by Tosoh Corp.

As the compound (a-2) giving an anionic group, there can be used, for example, a compound having a carboxyl group, such as 2,2-dimethylolpropionic acid, 2,2-dimethylolbutanoic acid, 2,2-dimethylolbutyric acid, or 2,2-valeric acid; a compound having a sulfonyl group, such as 3,4-diaminobutanesulfonic acid, 3,6-diamino-2-toluenesulfonic acid, 2,6-diaminobenzenesulfonic acid, or N-(2-aminoethyl)-2-aminoethylsulfonic acid, or the like. These compounds may be used individually or in any combination. Of these, a compound having a carboxyl group is preferably used because the dispersed state caused due to the compatibility of the aqueous urethane resin (A) and the thickening agent (B) is suitable for the formation of vertically long cells, enabling formation of more excellent vertically long cells.

A part of or all of the anionic group may be neutralized with a basic compound in the aqueous urethane resin composition. As the basic compound, there can be used, for example, ammonia; an organic amine, such as triethylamine, pyridine, or morpholine; an alkanolamine, such as monoethanolamine; or a metal basic compound containing sodium, potassium, lithium, calcium, or the like.

The chain extender (a-3) has a number average molecular weight in the range of from 50 to 490, and there can be used, for example, a chain extender having an amino group, such as ethylenediamine, 1,2-propanediamine, 1,6-hexamethylenediamine, piperazine, 2,5-dimethylpiperazine, isophorone diamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine; a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane, or the like. These chain extenders may be used individually or in any combination. From the viewpoint of the mechanical strength of the porous body, the amount of the chain extender (a-3) used is preferably in the range of from 0.01 to 8% by mass, more preferably in the range of from 0.01 to 5% by mass, based on the total mass of the raw materials for the aqueous urethane resin (A).

As the polyisocyanate (a-4), there can be used, for example, an aromatic polyisocyanate, such as phenylene diisocyanate, toluene diisocyanate, diphenylmethane diisocyanate, naphthalene diisocyanate, polymethylene polyphenyl polyisocyanate, or carbodiimide-modified diphenylmethane polyisocyanate; an aliphatic or alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, or norbornene diisocyanate, or the like. These polyisocyanates may be used individually or in any combination.

The aqueous urethane resin (A) can be produced by, for example, mixing the polyol (a-1), the compound (a-2) giving an anionic group, the chain extender (a-3), and the polyisocyanate (a-4) in the absence of a solvent or in the presence of an organic solvent to perform a urethane forming reaction, for example, at a temperature of 50 to 100°C for 3 to 10 hours.

Alternatively, the aqueous urethane resin (A) can be produced by, for example, mixing the polyol (a-1), the compound (a-2) giving an anionic group, and the polyisocyanate (a-4) in the absence of a solvent or in the presence of an organic solvent to perform a reaction, for example, at a temperature of 50 to 100°C for 3 to 10 hours, obtaining a urethane prepolymer having an isocyanate group at the molecular end thereof, and then reacting the urethane prepolymer with the chain extender (a-3).

In the reaction of the polyol (a-1), the compound (a-2) giving an anionic group, the chain extender (a-3), and the polyisocyanate (a-4), the [isocyanate group/(hydroxyl group + amino group)] (molar ratio) is preferably in the range of from 0.9 to 1.1, more preferably in the range of from 0.93 to 1.05.

With respect to the organic solvent usable in producing the aqueous urethane resin (A), there can be used, for example, a ketone solvent, such as acetone or methyl ethyl ketone; an ether solvent, such as tetrahydrofuran or dioxane; an acetate solvent, such as ethyl acetate or butyl acetate; a nitrile solvent, such as acetonitrile; an amide solvent, such as dimethylformamide or N-methylpyrrolidone, or the like. The organic solvents may be used individually or in any combination.

From the viewpoint of preventing formation of precipitate, the average particle diameter of the aqueous urethane resin (A) is preferably in the range of from 0.01 to 1 $\mu$m, more preferably in the range of from 0.05 to 0.9 $\mu$m. The method for measuring the average particle diameter of the aqueous urethane resin (A) is described in the Examples below.

From the viewpoint of physical properties of the resultant processed article, such as flexibility and a strength, and processability, the weight average molecular weight of the aqueous urethane resin (A) is preferably in the range of from 10,000 to 1,000,000, more preferably in the range of from 30,000 to 500,000. The weight average molecular weight of the aqueous urethane resin (A) indicates a value obtained by conducting measurement in the same manner as in the measurement made for the number average molecular weight of the polyol (a-1).

From the viewpoint of obtaining excellent viscosity and application operation properties, the content of the aqueous urethane resin (A) in the aqueous urethane resin composition is preferably in the range of from 10 to 60% by mass, more preferably in the range of from 20 to 50% by mass.

From the viewpoint of the application properties and storage stability, the aqueous urethane resin composition preferably contains an aqueous medium (Z) in addition to the aqueous urethane resin (A).

As the aqueous medium (Z), for example, water, an organic solvent miscible with water, a mixture thereof or the like can be used. As the organic solvent miscible with water, there can be used, for example, an alcohol solvent, such as methanol, ethanol, n-propanol, or isopropanol; a ketone solvent, such as acetone or methyl ethyl ketone; a polyalkylene glycol solvent, such as ethylene glycol, diethylene glycol, or propylene glycol; an alkyl ether solvent, such as a polyalkylene polyol; a lactam solvent, such as N-methyl-2-pyrrolidone, or the like. Of these, water is preferably used from the viewpoint of the environmental properties.

As a method for producing the aqueous urethane resin composition, for example, there can be mentioned a method in which the aqueous urethane resin (A) is produced in the absence of a solvent or in the presence of the above-mentioned organic solvent, and then, if necessary, the anionic group in the aqueous urethane resin (A) is neutralized, and then the aqueous medium (Z) is fed to disperse the aqueous urethane resin (A) in the aqueous medium (Z).

When the aqueous urethane resin (A) and the aqueous medium (Z) are mixed with each other, if necessary, a machine, such as a homogenizer, may be used.

Further, when producing the aqueous urethane resin composition, in view of improving the dispersion stability of the aqueous urethane resin (A) in the aqueous medium (Z), an emulsifying agent may be used.

As the emulsifying agent, there can be used, for example, a nonionic emulsifying agent, such as polyoxyethylene nonyl phenyl ether, polyoxyethylene lauryl ether, polyoxyethylene styryl phenyl ether, polyoxyethylene sorbitol tetraoleate, or a polyoxyethylene-polyoxypropylene copolymer; an anionic emulsifying agent, such as a fatty acid salt, e.g., sodium oleate, an alkylsulfate salt, an alkylbenzenesulfonic acid salt, an alkylsulfosuccinic acid salt, a naphthalenesulfonic acid salt, a polyoxyethylene alkylsulfuric acid salt, a sodium alkanesulfonate, or a sodium alkyldiphenyl ether sulfonate; a cationic emulsifying agent, such as an alkylamine salt, an alkyltrimethylammonium salt, or an alkyldimethylbenzylammonium salt, or the like. These emulsifying agents may be used individually or in any combination.

The aqueous polyurethane composition may contain another additive in addition to the aqueous urethane resin (A) and the aqueous medium (Z).

As the additive, for example, an anti-foaming agent, a urethane formation catalyst, a silane coupling agent, a filler, a wax, a heat stabilizer, a light stabilizer, a pigment, a dye, an antistatic agent, an oil repellent agent, a flame retardant, an anti-blocking agent, or the like can be used. These additives may be used individually or in any combination.

In the invention, it is necessary that the aqueous urethane resin composition be thickened using a thickening agent (B) having a carboxyl group and having an oxyethylene group content of $2 \times 10^{-2}$ mol/g or less. The first reason for this is presumed that the above-mentioned requirement indicates that the thickening agent (B) is relatively unlikely to be dissolved in the aqueous medium (Z), and, by virtue of this, the thickening agent remaining in the aqueous urethane resin (A) forms voids upon being dried when obtaining a coagulate, and the resultant portion forms a porous structure. The second reason is presumed that, by virtue of having a carboxyl group, the thickening agent reacts with the coagulant (C), so that the viscosity of the thickening agent during the processing is changed, enabling formation of vertically long cells. In contrast, in the case where a thickening agent having an oxyethylene group content of more than $2.0 \times 10^{-2}$ mol/g is used, it is considered that the thickening agent is highly water-soluble and hence does not cause the above-mentioned formation of voids, so that a porous structure is not formed. Further, when a thickening agent having no carboxyl group is used, it is considered that the thickening agent is stable to the coagulant such that the viscosity of the thickening agent is not changed, so that vertically long cells are not formed.

From the viewpoint of enabling more stable formation of vertically long cells, the oxyethylene group content of the thickening agent (B) is preferably $1.8 \times 10^{-2}$ mol/g or less, more preferably $1.7 \times 10^{-2}$ mol/g or less. In the determination of the oxyethylene group content of the thickening agent (B), the oxyethylene group content is determined using the total molar number of the oxyethylene group [$CH_2CH_2O$], based on the total mass of the all compounds contained in the thickening agent (B), except for the solvent. For example, when a urethane thickening agent containing a urethane compound, an additive, such as an emulsifying agent, and water is used as the thickening agent (B), the oxyethylene group content is determined from the total molar number of the oxyethylene group in the urethane compound and the additive, based on the total mass of the all compounds contained in the thickening agent, except for water, that is, the total mass of the urethane compound and the additive.

Further, in the invention, it is necessary that the thickening agent (B) be incorporated into the aqueous urethane resin composition in an amount in the range of from 0.01 to 30 parts by mass, relative to 100 parts by mass of the aqueous urethane resin (A) (in terms of a solids content). When the amount of the thickening agent (B) incorporated is less than 0.01 part by mass, a problem is caused in that a desired thickening effect cannot be obtained, so that the application properties become poor, or a problem is caused in that a porous structure cannot be formed. When the amount of the thickening agent (B) incorporated is more than 30 parts by mass, not only cannot a porous structure be formed, but also an industrially usable film cannot be obtained due to embrittlement. From the viewpoint of enabling more stable formation of vertically long cells, the amount of the thickening agent (B) incorporated, relative to 100 parts by mass of the aqueous urethane resin (A), is preferably in the range of from 0.1 to 20 parts by mass, more preferably in the range of from 0.15 to 10 parts by mass. The amount of the thickening agent (B) incorporated is determined in terms of a solids content. For example, when carboxymethyl cellulose diluted with water is used as the thickening agent (B), the amount of the thickening agent (B) incorporated is calculated from the amount of the carboxymethyl cellulose per se used. Further, for example, when a urethane thickening agent containing a urethane compound, an additive, such as an emulsifying agent, and water is used as the thickening agent (B), the amount of the thickening agent (B) incorporated is calculated from the total mass of the thickening agent, except for water, that is, the total mass of the urethane compound and the additive.

As the thickening agent (B), specifically, there can be used, for example, carboxymethyl cellulose; an acrylic thickening agent having a carboxyl group; a urethane thickening agent having a carboxyl group; a protein thickening agent, such as casein, sodium caseinate, or ammonium caseinate, or the like. These thickening agents may be used individually or in any combination. When the thickening agent (B) is incorporated into the aqueous urethane resin composition, the thickening agent (B) may be used in the form of being diluted with an aqueous medium or the like.

As the acrylic thickening agent, for example, a polyacrylic acid salt, a polymerization product of (meth)acrylic acid and (a)an (meth)acrylic acid ester, or the like can be used. These thickening agents may be used individually or in any combination.

The polyacrylic acid salt is a polymerization product of at least one compound selected from the group consisting of acrylic acid, methacrylic acid, an acrylic acid salt, and a methacrylic acid salt.

As the salt, there can be used, for example, an alkali metal salt, such as a sodium salt, a potassium salt, or a lithium salt; an alkaline earth metal salt, such as a magnesium salt or a calcium salt; an ammonium salt; an alkanolamine salt, such as a monoethanolamine salt, a diethanolamine salt, or a triethanolamine salt; an alkylamine salt, such as a methylamine salt, an ethylamine salt, a propylamine salt, or a butylamine salt, or the like.

As the (meth)acrylic acid, for example, acrylic acid, methacrylic acid, or the like can be used. These compounds may be used individually or in any combination.

As the (meth) acrylic acid ester, there can be used, for example, (a) an (meth)acrylic acid ester having 1 to 4 carbon atoms, such as methyl (meth)acrylate, ethyl (meth)acrylate, n-propyl (meth)acrylate, isopropyl (meth)acrylate, n-butyl (meth)acrylate, isobutyl (meth)acrylate, or ter-butyl (meth)acrylate; (a)an (meth)acrylic acid ester having an oxyethylene group, such as (a)an (meth)acrylate having added thereto 3 to 60 mol of n-docosanol ethylene oxide, (a)an (meth)acrylate having added thereto 3 to 60 mol of n-octadecanol ethylene oxide, or (a)an (meth)acrylate having added thereto 3 to 60 mol of n-hexadecanol ethylene oxide, or the like. These compounds may be used individually or in any combination. In the invention, the term " (meth) acrylic acid ester" means acrylic acid ester and/or methacrylic acid ester, and the term "(meth)acrylate" means acrylate and/or methacrylate.

When using the polymerization product of (meth)acrylic acid and (a)an (meth)acrylic acid ester, from the viewpoint of enabling more stable formation of vertically long cells, the polymerization product is preferably obtained using (meth)acrylic acid as a raw material in an amount of 20% by mass or more, more preferably 40% by mass or more, further preferably in the range of from 50 to 99% by mass.

As the urethane thickening agent, there can be used, for example, a urethane thickening agent containing a urethane compound which is a reaction product of an oxyalkylene polyol, polyisocyanate, and a glycol compound having a carboxyl group.

As the oxyalkylene polyol, for example, a polymerization product of a polyhydric alcohol and an alkylene oxide can be used.

As the polyhydric alcohol, there can be used, for example, a glycol, such as ethylene glycol, 1,2-propylene glycol, 1,3-propylene glycol, 1,3-butylene glycol, 1,4-butylene glycol, 1,5-pentanediol, 2,2-dimethyl-1,3-propanediol, 1,6-hexanediol, 3-methyl-1,5-pentanediol, 1,8-octanediol, diethylene glycol, triethylene glycol, dipropylene glycol, tripropylene glycol, cyclohexane-1,4-diol, or cyclohexane-1,4-dimethanol; polyester polyol, or the like. These compounds may be used individually or in any combination.

As the alkylene oxide, for example, ethylene oxide, propylene oxide, butylene oxide, styrene oxide, or the like can be used. These compounds may be used individually or in any combination.

With respect to the oxyalkylene polyol, among those mentioned above, from the viewpoint of the production stability and thickening properties, polyethylene glycol is preferably used.

From the viewpoint of improving the working properties upon preparing the blend, the number average molecular weight of the polyoxyalkylene polyol is preferably in the range of from 2,000 to 12,000, more preferably in the range of from 2,500 to 10,000. The number average molecular weight of the polyoxyalkylene polyol indicates a value obtained by conducting measurement in the same manner as in the measurement made for the number average molecular weight of the polyol (a1).

The polyoxyalkylene polyol and another polyol may be used in combination if necessary. As such another polyol, for example, polycarbonate polyol, polyester polyol, polyacrylic polyol, polybutadiene polyol, or the like can be used. These polyols may be used individually or in any combination.

As the polyisocyanate, there can be used, for example, an aromatic polyisocyanate, such as phenylene diisocyanate, toluene diisocyanate, diphenylmethane diisocyanate, naphthalene diisocyanate, polymethylene polyphenyl polyisocyanate, or carbodiimide-modified diphenylmethane polyisocyanate; an aliphatic or alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, or norbornene diisocyanate, or the like. These polyisocyanates may be used individually or in any combination.

As the glycol compound having a carboxyl group, for example, 2,2-dimethylolpropionic acid, 2,2-dimethylolbutanoic acid, 2,2-dimethylolbutyric acid, 2,2-valeric acid, or the like can be used. These compounds may be used individually or in any combination.

In the urethane compound, a compound having a hydroxyl group or an amino group and a hydrophobic group may be further used so that the urethane compound has a hydrophobic group at the end thereof.

As the compound having a hydroxyl group or an amino group and a hydrophobic group, there can be used, for example, a branched aliphatic alcohol, such as 2-butyl-1-octanol, 2-butyl-1-decanol, 2-hexyl-1-octanol, 2-hexyl-1-decanol, isononyl alcohol, isodecyl alcohol, or isoundecyl alcohol; a linear aliphatic alcohol, such as 1-hexadecanol, 1-tetradecanol, 1-dodecanol, 1-undecanol, 1-decanol, 1-nonanol, 1-octanol, or 1-hexanol; an alkylaryl alcohol, such as nonylphenol or tristyrylphenol; an aliphatic amine, such as 1-decylamine, 1-octylamine, 1-hexylamine, dioctylamine, or dihexylamine; a polyalkylene glycol monoalkyl ether, such as a polyethylene glycol monoalkyl ether (in which the alkyl group has 8 to 24 carbon atoms) or a polypropylene glycol monoalkyl ether (in which the alkyl group has 8 to 24 carbon atoms); a polyalkylene glycol monoalkylphenyl ether, such as a polyethylene glycol monoalkylphenyl ether (in which the alkyl group has 8 to 24 carbon atoms) or a polypropylene glycol monoalkylphenyl ether (in which the alkyl group has 8 to 24 carbon atoms), or the like.

From the viewpoint of enabling formation of more excellent porous structure, the weight average molecular weight of the urethane compound is preferably in the range of from 2,000 to 100,000, more preferably in the range of from 10,000 to 90,000, further preferably in the range of from 20,000 to 80,000. The weight average molecular weight of the urethane compound indicates a value obtained by conducting measurement in the same manner as in the measurement made for the number average molecular weight of the polyol (a1).

The urethane thickening agent may contain an additive in addition to the urethane compound. As the additive, for example, an aqueous medium, an emulsifying agent, an anti-foaming agent, a dispersant, or the like can be used. These additives may be used individually or in any combination. As the emulsifying agent, for example, an emulsifying agent similar to the emulsifying agent usable in producing the aqueous urethane resin composition can be used.

In the case where a urethane thickening agent is used as the thickening agent (B), as a method for controlling the oxyethylene group content, for example, there can be mentioned a method in which a polyoxyalkylene polyol as a raw material having a reduced oxyethylene group content is used, a method in which the amount of the polyethylene glycol used is reduced, a method in which an emulsifying agent having a reduced oxyethylene group content is used, and a method in which the amount of the emulsifying agent having an oxyethylene group used is reduced.

With respect to the thickening agent (B), among those mentioned above, from the viewpoint of enabling more stable formation of vertically long cells for the reason that the thickening effect is suitable for the working properties, carboxymethyl cellulose and/or an acrylic thickening agent is preferably used, and at least one thickening agent selected from the group consisting of carboxymethyl cellulose, a polyacrylic acid salt, and a polymerization product of (meth)acrylic acid and (a)an (meth)acrylic acid ester is more preferred. Carboxymethyl cellulose and/or a polyacrylic acid salt is further preferred, and carboxymethyl cellulose is especially preferred because the blend containing the aqueous urethane resin (A) and thickening agent (B) is in a dispersed state that is suitable for the formation of vertically long cells, so that vertically long cells having even more excellent flexibility, elastic properties, water vapor permeability, and wear resistance than those of cells of a closed-cell type can be more stably obtained.

In thickening the aqueous urethane resin composition using the thickening agent (B), from the viewpoint of obtaining more excellent porous structure, the aqueous urethane resin composition containing the thickening agent (B) is thickened so as to have a viscosity of 400 mPa·s or more, more preferably a viscosity in the range of from 450 to 10,000 mPa·s, further preferably a viscosity in the range of from 500 to 8, 000 mPa·s. With respect to the measurement method for the viscosity of the aqueous urethane resin composition (containing the thickening agent) after being thickened, the viscosity indicates a value measured at 25°C using a Brookfield viscometer (M3 rotor, 30 revolutions).

With respect to the method for thickening the aqueous urethane resin composition using the thickening agent (B), the thickening agent (B) and the aqueous urethane resin composition may be in contact with each other, and, for example, there can be mentioned a method of mixing the thickening agent (B) and the aqueous urethane resin composition with each other. In the mixing, a stirring rod, a mechanical mixer, or the like can be used. After the thickening, the resultant aqueous urethane resin composition is preferably deaerated using a deaerator or the like and then subjected to the below-mentioned salt coagulation.

Then, the thickened aqueous urethane resin composition is coagulated using the coagulant (C) containing the metal salt (c-1).

As the metal salt (c-1), for example, calcium nitrate, zinc chloride, zinc nitrate, calcium chloride, magnesium acetate, aluminum sulfate, sodium chloride, or the like can be used. These metal salts may be used individually or in any combination. Of these, calcium nitrate is preferably used from the viewpoint of further improvement of the coagulation properties due to large electrical double layer compression effect.

The coagulant (C) may contain a solvent in addition to the metal salt (c-1).

As the solvent, there can be used, for example, an aqueous medium similar to the aqueous medium (Z); an alcohol solvent, such as methanol, ethanol, 1-propanol, 2-propanol, 1-butanol, 2-butanol, 2-methyl-2-propanol, 1-pentanol, 2-pentanol, 2-methyl-2-butanol, 1-hexanol, 2-hexanol, cyclohexanol, 2-methyl-2-pentanol, or 3-methyl-3-pentanol, or the like.

From the viewpoint of achieving excellent salt coagulation, the content of the metal salt in the coagulant (C) is preferably in the range of from 1 to 40% by mass, more preferably in the range of from 2 to 30% by mass.

A specific example of the method for producing a coagulate of the invention is described below.

As the method for producing a coagulate, for example, there can be mentioned a method in which the aqueous urethane resin composition is thickened using the thickening agent (B), and then the thickened aqueous urethane resin composition is applied to a substrate, or a substrate is immersed in the thickened aqueous urethane resin composition, and then the resultant substrate is further immersed in the coagulant (C), followed by drying, to produce a coagulate; and a method in which the coagulant (C) is applied to a substrate, or a substrate is immersed in the coagulant (C), and then the thickened aqueous urethane resin composition is further applied to the resultant substrate, or the thickened aqueous urethane resin composition is immersed in the substrate, followed by drying, to produce a coagulate. These methods can be appropriately selected depending on the substrate and the application in which the coagulate is used.

As the substrate , there can be used, for example, a fiber substrate, such as nonwoven fabric, woven fabric, or knitted fabric; a wooden substrate, such as a board, an MDF (medium density fiber board), or a particle board; a metal substrate of aluminum, iron or the like; a plastic substrate, such as a polycarbonate substrate, a cycloolefin resin substrate, an acrylic resin substrate, a silicone resin substrate, an epoxy resin substrate, a fluororesin substrate, a polystyrene resin substrate, a polyester resin substrate, a polysulfone resin substrate, a polyarylate resin substrate, a polyvinyl chloride resin substrate, a polyvinylidene chloride substrate, an amorphous polyolefin resin substrate, a polyimide resin substrate, an alicyclic polyimide resin substrate, a cellulose resin substrate, a TAC (triacetyl cellulose) substrate, a COP (cycloolefin polymer) substrate, a PC (polycarbonate) substrate, a PBT (polybutylene terephthalate) substrate, a modified PPE (polyphenylene ether) substrate, a PEN (polyethylene naphthalate) substrate, a PET (polyethylene terephthalate) substrate, or a polylactic acid polymer substrate; a release-treated plastic substrate; a glass plate, or the like. The substrate may have a portion of a complicated shape, such as a groove portion, an R portion, or an inverted R portion.

As a method for applying the thickened aqueous urethane resin composition to the substrate, for example, there can be mentioned a knife coater method, a spraying method, a curtain coater method, a flow coater method, a roll coater method, and a brushing method. The thickness of the composition applied in the above method is appropriately selected depending on the application in which the coagulate is used, but, for example, the thickness is in the range of from 10 to 2,000 $\mu$m. Further, as a method for immersing in the coagulant (C) the coated substrate to which the aqueous urethane resin composition is applied, for example, there can be mentioned a method in which the coated substrate is directly immersed in a bath storing therein the coagulant (C) to cause salt coagulation to proceed. In this method, the immersion or coagulation time is, for example, 1 second to 30 minutes.

As a method for immersing the substrate in the coagulant (C), for example, there can be mentioned a method in which the substrate is directly immersed in a bath storing therein the coagulant (C). The immersion time is, for example, 1 second to 5 minutes. Further, as a method for immersing the immersed substrate in the thickened aqueous urethane resin composition, for example, there can be mentioned a method in which the immersed substrate is directly immersed in a bath storing therein the thickened aqueous urethane resin composition to cause salt coagulation to proceed. In this method, the immersion or coagulation time is, for example, 1 second to 10 minutes.

After the coagulate is obtained, if necessary, the coagulate may be, for example, immersed in water for 10 minutes to 8 hours, or exposed to running water to wash and remove the unnecessary coagulant. Further, after then, for example, the coagulate may be hot-air dried at 60 to 120°C for 1 minute to 3 hours.

As described above, by the method of the invention, a porous structure can be formed from an aqueous urethane resin composition without subjecting the composition to heating or foaming step, and therefore a coagulate having a porous structure can be stably obtained with ease.

Examples

Hereinafter, the present invention will be described in more detail with reference to the following Examples.

[Preparation Example 1] Preparation of aqueous urethane resin composition (X-1)

In a vessel equipped with a thermometer, a nitrogen gas introducing pipe, and a stirrer and purged with nitrogen gas, 500 parts by mass of polytetramethylene ether glycol (number average molecular weight: 2,000), 25 parts by mass of 2,2'-dimethylolpropionic acid (hereinafter, abbreviated to "DMPA"), and 128 parts by mass of dicyclohexylmethane diisocyanate (hereinafter, abbreviated to "H$_{12}$MDI") were reacted at 70°C in the presence of 620 parts by mass of methyl ethyl ketone until a point in time when the NCO% of the reaction product reached a predetermined NCO%, obtaining a methyl ethyl ketone solution of a urethane prepolymer having an isocyanate group at the end thereof.

Then, 23 parts by mass of triethylamine was added as a neutralizing agent to the above-obtained organic solvent solution of the urethane prepolymer and the resultant mixture was stirred, and further 830 parts by mass of water was added to the mixture, followed by stirring, to obtain an emulsion having the urethane prepolymer dispersed in water.

The obtained emulsion and 3.2 parts by mass of an aqueous chain extender solution containing 2.6 parts by mass of hydrazine were mixed with each other to cause a chain extension reaction, obtaining a water dispersion of a urethane resin (A-1). Then, the obtained water dispersion was subjected to desolvation to obtain an aqueous urethane resin composition (X-1) having a nonvolatile content of 30% by mass.

[Preparation Example 2] Preparation of aqueous urethane resin composition (X-2)

In a vessel equipped with a thermometer, a nitrogen gas introducing pipe, and a stirrer and purged with nitrogen gas, 300 parts by mass of polypropylene glycol (number average molecular weight; 2,000), 3 parts by mass of 1,6-hexanediol, 10 parts by mass of DMPA, and 94 parts by mass of H$_{12}$MDI were reacted at 70°C in the presence of 400 parts by mass of methyl ethyl ketone until a point in time when the NCO% of the reaction product reached a predetermined NCO%, obtaining a methyl ethyl ketone solution of a urethane prepolymer having an isocyanate group at the end thereof.

Then, 5 parts by mass of triethylamine was added as a neutralizing agent to the above-obtained organic solvent solution of the urethane prepolymer and the resultant mixture was stirred, and further 800 parts by mass of water was added to the mixture, followed by stirring, to obtain an emulsion having the urethane prepolymer dispersed in water.

The obtained emulsion and 67 parts by mass of an aqueous chain extender solution containing 6.5 parts by mass of piperazine were mixed with each other to cause a chain extension reaction, obtaining a water dispersion of a urethane resin (A-2). Then, the obtained water dispersion was subjected to desolvation to obtain an aqueous urethane resin composition (X-2) having a nonvolatile content of 40% by mass.

[Preparation Example 3] Preparation of aqueous urethane resin composition (X-3)

In a vessel equipped with a thermometer, a nitrogen gas introducing pipe, and a stirrer and purged with nitrogen gas, 250 parts by mass of polycarbonate diol ("ETERNACOLL UH-200", manufactured by Ube Industries, Ltd.; number average molecular weight: 2,000), 18 parts by mass of DMPA, and 90 parts by mass of $H_{12}MDI$ were reacted at 70°C in the presence of 236 parts by mass of methyl ethyl ketone until a point in time when the NCO% of the reaction product reached a predetermined NCO%, obtaining a methyl ethyl ketone solution of a urethane prepolymer having an isocyanate group at the end thereof.

Then, 16 parts by mass of triethylamine was added as a neutralizing agent to the above-obtained organic solvent solution of the urethane prepolymer and the resultant mixture was stirred, and further 797 parts by mass of water was added to the mixture, followed by stirring, to obtain an emulsion having the urethane prepolymer dispersed in water.

The obtained emulsion and 6.3 parts by mass of an aqueous extender chain solution containing 5.0 parts by mass of hydrazine were mixed with each other to cause a chain extension reaction, obtaining a water dispersion of a urethane resin (A-3). Then, the obtained water dispersion was subjected to desolvation to obtain an aqueous urethane resin composition (X-3) having a nonvolatile content of 35% by mass.

[Preparation Example 4] Preparation of aqueous polyurethane composition (X'-1)

In a vessel equipped with a thermometer, a nitrogen gas introducing pipe, and a stirrer and purged with nitrogen gas, 1,000 parts by mass of polytetramethylene glycol (manufactured by Mitsubishi Chemical Corporation; number average molecular weight: 2,000), 50 parts by mass of "UNILUBE 75DE-60", manufactured by NOF Corporation (polyoxyethylene oxypropylene glycol; polyoxyethylene structure/polyoxypropylene structure (mass ratio) = 75/25; number average molecular weight: about 3,000), 50 parts by mass of "UNILUBE 75MB-900", manufactured by NOF Corporation (polyoxyethylene oxypropylene glycol monobutyl ether; polyoxyethylene structure/polyoxypropylene structure (mass ratio) = 75/25; number average molecular weight: about 3,400), and 183 parts by mass of $H_{12}MDI$ were reacted at 70°C in the presence of 1,283 parts by mass of methyl ethyl ketone until a point in time when the NCO% of the reaction product reached a predetermined NCO%, obtaining a methyl ethyl ketone solution of a urethane prepolymer having an isocyanate group at the end thereof.

Then, 2, 566 parts by mass of water was added to the above-obtained organic solvent solution of the urethane prepolymer and the resultant mixture was stirred to obtain a water dispersion of an aqueous urethane resin. The obtained emulsion and 135 parts by mass of an aqueous chain extender solution containing 13.5 parts by mass of piperazine were mixed with each other to cause a chain extension reaction, obtaining a water dispersion of a urethane resin (A'-1). Then, the obtained water dispersion was subjected to desolvation to obtain an aqueous urethane resin composition (X'-1) having a nonvolatile content of 40% by mass.

[Example 1]

To 100 parts by mass of the aqueous urethane resin composition (X-1) was added 6.3 parts by mass of carboxymethyl cellulose ("CELLOGEN WS-C", manufactured by Dai-ichi Kogyo Seiyaku Co. Ltd., which is, hereinafter, abbreviated to "CMC") diluted with water at 5% by mass, and the resultant mixture was stirred using a mechanical mixer at 800 rpm for 10 minutes, and then deaerated using a centrifugal deaerator to prepare a blend. The blend (aqueous urethane resin composition containing a thickening agent) had a viscosity of 2,528 mPa·s. Further, the blend was applied to a release-treated polypropylene film using a knife coater. Subsequently, the resultant coated film was immersed in a 5% by mass aqueous solution of calcium nitrate for 3 minutes to coagulate the blend. Then, the resultant coagulate was exposed to running water for 5 hours to wash and remove the excess coagulant. Then, the coagulate was dried at 70°C for 20 minutes and at 120°C for 20 minutes to obtain a dried porous body.

[Examples 2 to 8 and Comparative Examples 1 to 5]

Porous bodies were individually prepared in substantially the same manner as in Example 1 except that the type of the aqueous urethane resin composition used and the type and amount of the thickening agent (B) were changed as shown in Tables 1 to 4.

[Method for measuring an average particle diameter of aqueous urethane resin (A)]

With respect to each of the aqueous urethane resin compositions obtained in the Preparation Examples, using a laser diffraction/scattering-type particle size distribution measurement apparatus ("LA-910", manufactured by Horiba, Ltd.) and using water as a dispersing medium, an average particle diameter was measured at a relative refractive index of 1.10 wherein the particle diameter was measured on an area basis.

[Method for measuring an acid value of aqueous urethane resin (A)]

The aqueous urethane resin compositions obtained in the Preparation Examples were individually dried, and 0.05 to 0.5 g of the dried and solidified resin particles were weighed and placed in a 300 mL Erlenmeyer flask, and then about 80 mL of a mixed solvent of tetrahydrofuran and ion-exchanged water in a mass ratio [tetrahydrofuran/ion-exchanged water] of 80/20 was added to the resin particles to obtain a mixture of them.

Subsequently, a phenolphthalein indicator was mixed into the obtained mixture, and then the mixture was subjected to titration using a 0.1 mol/L aqueous solution of potassium hydroxide which had been preliminarily subjected to standardization. From the amount of the aqueous solution of potassium hydroxide used in the titration, an acid value (mg KOH/g) of the aqueous urethane resin (A) was determined according to the following formula (2) for calculation.

Formula for calculation:

$$\text{Formula for calculation: } A = (B \times f \times 5.611)/S \quad (2)$$

In the above formula, A is an acid value (mg KOH/g) of the resin in terms of solids, B is the amount (mL) of the 0.1 mol/L aqueous solution of potassium hydroxide used in the titration, f is a factor of the 0.1 mol/L aqueous solution of potassium hydroxide, S is the mass (g) of the resin particles, and 5.611 is the formula weight (56.11/10) of potassium hydroxide.

[Method for evaluating the state of formation of the vertically long cells of a porous body]

The porous bodies obtained in the Examples and Comparative Examples were individually observed using Scanning electron microscope "SU3500", manufactured by Hitachi High-Technologies Corporation (magnification: 200 times) and evaluated as follows.

"T": A porous body in which a number of vertically long cells are confirmed in the cross-sectional view of the urethane resin layer in an electron photomicrograph.
"F": A porous body outside those mentioned above.

[Table 1]

| Table 1 | Example 1 | Example 2 | Example 3 |
|---|---|---|---|
| Aqueous urethane resin composition | (X-1) | (X-2) | (X-3) |
| Aqueous urethane resin (A) | (A-1) | (A-2) | (A-3) |
| Acid value (mg KOH/g) | 16 | 10 | 21 |
| Thickening agent (B) | CMC | CMC | CMC |
| Oxyethylene group content (mol/g) | 0 | 0 | 0 |
| Amount (parts by mass) of thickening agent (B) incorporated (relative to 100 parts by mass of aqueous urethane resin (A)) | 1.1 | 0.5 | 0.64 |
| Viscosity of aqueous urethane resin composition after thickened (mPa·s) | 2,528 | 2,769 | 2 , 175 |
| Coagulant (C) | | | |

(continued)

| Table 1 | Example 1 | Example 2 | Example 3 |
|---|---|---|---|
| Metal salt (c-1) | Aqueous solution of calcium nitrate | Aqueous solution of calcium nitrate | Aqueous solution of calcium nitrate |
| Evaluation method for state of formation of vertically long cells of porous body | T | T | T |

[Table 2]

| Table 2 | Example 4 | Example 5 | Example 6 |
|---|---|---|---|
| Aqueous urethane resin composition | (X-1) | (X-3) | (X-1) |
| Aqueous urethane resin (A) | (A-1) | (A-3) | (A-1) |
| Acid value (mg KOH/g) | 16 | 21 | 16 |
| Thickening agent (B) | ALA | ALA | CMC |
| Oxyethylene group content (mol/g) | 0 | 0 | 0 |
| Amount (parts by mass) of thickening agent (B) incorporated (relative to 100 parts by mass of aqueous urethane resin (A)) | 0.54 | 0.63 | 8 |
| Viscosity of aqueous urethane resin composition after thickened (mPa·s) | 1,760 | 2,500 | 12,650 |
| Coagulant (C) | | | |
| Metal salt (c-1) | Aqueous solution of calcium nitrate | Aqueous solution of calcium nitrate | Aqueous solution of calcium nitrate |
| Evaluation method for state of formation of vertically long cells of porous body | T | T | T |

[Table 3]

| Table 3 | Example 7 | Example 8 | Comparative Example 1 |
|---|---|---|---|
| Aqueous urethane resin composition | (X-1) | (X-1) | (X-1) |
| Aqueous urethane resin (A) | (A-1) | (A-1) | (A-1) |
| Acid value (mg KOH/g) | 16 | 16 | 16 |
| Thickening agent (B) | CMC | CMC | T10 |
| Oxyethylene group content (mol/g) | 0 | 0 | $2.1 \times 10^{-2}$ |
| Amount (parts by mass) of thickening agent (B) incorporated (relative to 100 parts by mass of aqueous urethane resin (A)) | 0.2 | 1.1 | 0.8 |
| Viscosity of aqueous urethane resin composition after thickened (mPa·s) | 468 | 2,528 | 2,905 |
| Coagulant (C) | | | |
| Metal salt (c-1) | Aqueous solution of calcium nitrate | Methanol solution of calcium nitrate | Aqueous solution of calcium nitrate |
| Evaluation method for state of formation of vertically long cells of porous body | T | T | F |

[Table 4]

| Table 4 | Comparative Example 2 | Comparative Example 3 | Comparative Example 4 | Comparative Example 5 |
|---|---|---|---|---|
| Aqueous urethane resin composition | (X'-1) | (X-1) | (X-1) | (X-1) |
| Aqueous urethane resin (A) | (A'-1) | (A-1) | (A-1) | (A-1) |
| Acid value (mg KOH/g) | 0 | 16 | 16 | 16 |
| Thickening agent (B) | CMC | CMC | CMC | MC |
| Oxyethylene group content (mol/g) | 0 | 0 | 0 | 0 |
| Amount (parts by mass) of thickening agent (B) incorporated (relative to 100 parts by mass of aqueous urethane resin (A)) | 2 | 0.008 | 35 | 2.4 |
| Viscosity of aqueous urethane resin composition after thickened (mPa·s) | 1,964 | 254 | 19,315 | 627 |
| Coagulant (C) | | | | |
| Metal salt (c-1) | Aqueous solution of calcium nitrate | Aqueous solution of calcium nitrate | Aqueous solution of calcium nitrate | Aqueous solution of calcium nitrate |
| Evaluation method for state of formation of vertically long cells of porous body | F | F | F | F |

The abbreviations shown in Tables 1 to 4 are described below.

- ALA: "Borch Gel ALA", manufactured by Borchers GmbH; sodium salt of polyacrylic acid
- "T10": "Assistor T10", manufactured by DIC Corporation (which contains a reaction product of 1,6-hexane diisocyanate and polyethylene glycol having a number average molecular weight of 6,000, polyoxyethylene distyrenated phenylene ether, and water (content: 75% by mass); oxyethylene group content: $2.1 \times 10^{-2}$ mol/g)
- "MC": Methyl cellulose

As can be seen in Fig. 1, it has been found that a porous body having vertically long cells can be obtained by the method of the invention.

On the other hand, with respect to Comparative Example 1 that is an embodiment using, instead of the thickening agent (B), a thickening agent having an oxyethylene group content which is more than the range defined in the present invention, it has been found that the obtained coagulate has no porous structure formed.

With respect to Comparative Example 2 that is an embodiment using a nonionic urethane resin having no acid value instead of the thickening agent (B), instead of the aqueous urethane resin (A), any coagulate was not obtained.

With respect to Comparative Example 3 that is an embodiment in which the amount of the thickening agent (B) used is less than the range defined in the present invention, it has been found that the obtained coagulate has no porous structure formed. Further, a desired thickening effect was not obtained, and the application properties were markedly poor, and it was extremely difficult to prepare a uniform film.

With respect to Comparative Example 4 that is an embodiment in which the amount of the thickening agent (B) used is more than the range defined in the present invention, it has been found that the obtained coagulate has no porous structure formed. Further, the obtained film was so brittle that it could not be industrially used.

With respect to Comparative Example 5 that is an embodiment using a thickening agent having no carboxyl group instead of the thickening agent (B), a porous structure was obtained, but the cells were small and were not vertically long.

**Claims**

1. A method for producing a porous body, comprising:

incorporating, into an aqueous urethane resin composition containing an aqueous urethane resin (A) having an acid value of 0.01 mg KOH/g or more, a thickening agent (B) having a carboxyl group and having an oxyethylene group content of $2 \times 10^{-2}$ mol/g or less in an amount in the range of from 0.01 to 30 parts by mass, relative to 100 parts by mass of the aqueous urethane resin (A), to thicken the composition so as to have a viscosity of 400 mPa·s or more; and
then coagulating the thickened composition using a coagulant (C) containing a metal salt (c-1);
wherein the viscosity of the aqueous urethane resin composition containing the thickening agent after being thickened is measured at 25°C using a Brookfield viscometer with an M3 rotor at 30 revolutions.

2. The method for producing a porous body according to claim 1, wherein the thickening agent (B) is carboxymethyl cellulose and/or an acrylic thickening agent.

**Patentansprüche**

1. Verfahren zur Herstellung eines porösen Körpers, umfassend:

das Einarbeiten in eine wässrige Urethanharzzusammensetzung, enthaltend ein wässriges Urethanharz (A) mit einem Säurewert von 0,01 mg KOH/g oder mehr, eines Verdickungsmittels (B) mit einer Carboxylgruppe und mit einem Oxyethylengruppengehalt von $2 \times 10^{-2}$ mol/g oder weniger in einer Menge im Bereich von 0,01 bis 30 Gewichtsteilen, bezogen auf 100 Gewichtsteile des wässrigen Urethanharzes (A), um die Zusammensetzung so zu verdicken, dass sie eine Viskosität von 400 mPa·s oder mehr aufweist; und
das anschließende Koagulieren der verdickten Zusammensetzung unter Verwendung eines Koagulierungsmittels (C), das ein Metallsalz (c-1) enthält;
wobei die Viskosität der wässrigen Urethanharzzusammensetzung, die das Verdickungsmittel enthält, nach dem Verdicken bei 25°C unter Verwendung eines Brookfield-Viskosimeters mit einem M3-Rotor bei 30 Umdrehungen gemessen wird.

2. Verfahren zur Herstellung eines porösen Körpers nach Anspruch 1, wobei das Verdickungsmittel (B) Carboxymethylcellulose und/oder ein acrylisches Verdickungsmittel ist.

**Revendications**

1. Procédé de production d'un corps poreux, comprenant :

l'incorporation, dans une composition de résine d'uréthane aqueuse contenant une résine d'uréthane aqueuse (A) présentant un indice acide de 0,01 mg de KOH/g ou plus, d'un agent épaississant (B) présentant un groupe carboxyle et présentant une teneur en groupe oxyéthylène de $2 \times 10^{-2}$ mol/g ou moins dans une quantité dans la plage de 0,01 à 30 parties en poids, par rapport à 100 parties en poids de la résine d'uréthane aqueuse (A), pour épaissir la composition de façon à obtenir une viscosité de 400 mPa·s ou plus ; et
la coagulation de la composition épaissie en utilisant un coagulant (C) contenant un sel métallique (c-1) ;
dans lequel la viscosité de la composition de résine d'uréthane aqueuse contenant l'agent épaississant après être épaissie est mesurée à 25 °C en utilisant un viscosimètre de Brookfield avec un rotor M3 à 30 tours.

2. Procédé pour la production d'un corps poreux selon la revendication 1, dans lequel l'agent épaississant (B) est la carboxyméthylcellulose et/ou un agent épaississant acrylique.

Fig. 1

5kV X200 100μm 14 28 SEI

**REFERENCES CITED IN THE DESCRIPTION**

**Patent documents cited in the description**

- WO 2015012117 A1
- JP 2000160484 A
- JP 2002249985 A
- JP 2013083031 A
- JP 2005273083 A
- JP 2006511727 T
- JP 2006524754 T
- JP 2009527658 T
- JP 2013023691 T